# EUROPÄISCHE PATENTANMELDUNG

(11) **EP 2 163 441 A2**
(43) Veröffentlichungstag der Anmeldung: **17.03.2010**
(21) Anmeldenummer: 09100126.3
(22) Anmeldetag: 18.02.2009
(51) Int. Cl.: B60S 1/34

(54) **Welle in einer Scheibenwischvorrichtung**

(30) Priorität: 11.09.2008 DE 102008041997
(71) Anmelder: Robert Bosch GmbH, 70442 Stuttgart (DE)
(72) Erfinder: Hawighorst, Achim, 77830 Buehlertal (DE); Wegner, Norbert, 77815 Buehl (DE)

(57) **Zusammenfassung**

Eine Welle im Übertragungsweg zwischen einem Antriebsmotor (6) und einem Wischarm (4) einer Scheibenwischvorrichtung (1) ist zweiteilig aufgebaut und umfasst ein Basisteil (14) und ein separat ausgebildetes, austauschbares Verlängerungsteil (15), das mithilfe einer Verbindungseinrichtung (20) lösbar mit dem Basisteil (14) koppelbar ist.

## Beschreibung

Die Erfindung bezieht sich auf eine Welle in einer Scheibenwischvorrichtung nach dem Oberbegriff des Anspruches 1.

### Stand der Technik

Aus der DE 102 59 154 A1 ist eine Scheibenwischvorrichtung für ein Kraftfahrzeug bekannt, die einen elektrischen Antriebsmotor, ein Schneckengetriebe, eine Abtriebswelle sowie einen Wischarm mit einem daran gehaltenen Wischblatt umfasst. Der Wischarm wird von der Abtriebswelle betätigt, die über das Schneckengetriebe mit der Ankerwelle des elektrischen Antriebsmotors drehgekoppelt ist.

Derartige Scheibenwischvorrichtungen werden in großer Stückzahl hergestellt. Aus Kostengründen ist man bestrebt, eine möglichst große Anzahl an Gleichteilen für verschiedene Fahrzeugtypen einzusetzen. Aufgrund unterschiedlicher geometrischer Abmessungen in den verschiedenen Fahrzeugen ist jedoch ein erheblicher Anpassungsaufwand erforderlich.

### Offenbarung der Erfindung

Der Erfindung liegt die Aufgabe zu Grunde, mit einfachen konstruktiven Maßnahmen eine Scheibenwischvorrichtung an unterschiedliche Einbausituationen anzupassen.

Diese Aufgabe wird erfindungsgemäß mit den Merkmalen des Anspruches 1 gelöst. Die Unteransprüche geben zweckmäßige Weiterbildungen an.

Die erfindungsgemäße Welle, die sich im Übertragungsweg zwischen dem Antriebsmotor und dem Wischarm der Scheibenwischvorrichtung in einem Fahrzeug befindet, ist zweiteilig aufgebaut und umfasst ein Basisteil sowie ein hiervon separat ausgebildetes Verlängerungsteil, wobei das Basisteil und das Verlängerungsteil lösbar miteinander zu koppeln sind. Die Kopplung zwischen Basisteil und Verlängerungsteil erlaubt es, die Bewegung des Basisteils, welche von dem Antriebsmotor erzeugt wird, auf das Verlängerungsteil zu übertragen. Auf Grund der Austauschbarkeit des Verlängerungsteils können je nach aktueller Einbausituation verschiedene Längen und/oder Querschnittsgeometrien des Verlängerungsteils eingesetzt werden, wobei die übrigen Bauteile der Scheibenwischvorrichtung beibehalten werden können. Dadurch wird nach Art eines Baukastensystems die Verwendung einer hohen Anzahl an Gleichteilen auch für unterschiedliche Fahrzeugtypen ermöglicht. Es muss lediglich das Verlängerungsteil ausgetauscht werden, das mithilfe der Verbindungseinrichtung mit dem Basisteil gekoppelt wird.

Die Verbindungseinrichtung erlaubt eine Bewegungsübertragung vom Basisteil auf das Verlängerungsteil. Im Falle einer drehbar gelagerten Welle, die aus dem Basis- und Verlängerungsteil besteht, ist die zu übertragende Bewegung eine Drehbewegung um die Wellenlängsachse. Grundsätzlich kommen aber auch translatorische oder gemischt translatorisch-rotatorische Stellbewegungen in Betracht, die von der Antriebseinheit der Scheibenwischvorrichtung erzeugt und über die zweiteilige Welle auf den Wischarm übertragen werden. Beispielsweise ist es möglich, dass die Stellbewegung eine oszillierende translatorische Bewegung ist, die exzentrisch auf den drehbar gelagerten Wischarm wirkt und diesen um die Drehachse antreibt.

Gemäß bevorzugter Ausführung handelt es sich bei der Welle um eine Abtriebswelle, die über eine Getriebeeinheit, beispielsweise ein Zahnrad, mit einer Anker- bzw. Rotorwelle des als Elektromotor ausgebildeten Antriebsmotors drehgekoppelt ist. Die Abtriebswelle steht üblicherweise in einem Winkel zur Ankerwelle und dient zur Bewegungsübertragung der Antriebsbewegung des Elektromotors auf den Wischarm. Auf Grund der Zweiteiligkeit der Abtriebswelle und der Austauschbarkeit des Verlängerungsteils können unterschiedlich große Distanzen zwischen der Getriebeeinheit bzw. dem Zahnrad und dem Wischarm überbrückt werden.

Grundsätzlich kann aber auch beispielsweise die Ankerwelle zweiteilig mit Basisteil und Verlängerungsteil ausgebildet sein.

Die Kopplung zwischen Basis- und Verlängerungsteil erfolgt mittels der Verbindungs- bzw. Kupplungseinrichtung, die vorzugsweise als ein separates, zusätzliches Bauteil ausgeführt ist, das das Verlängerungsteil zumindest axial am Basisteil sichert. Beispielsweise ist die Verbindungseinrichtung als Kupplungselement bzw. -hülse ausgeführt, die das Basisteil und das Verlängerungsteil übergreift und beispielsweise über Absätze oder Gewindeabschnitte mit den Teilen der Welle verbindet. Die Kupplungshülse ist beispielsweise mit einem stirnseitigen Innengewinde versehen, das mit einem entsprechenden Außengewinde an einem der beiden Wellenteile kämmt. An der gegenüberliegenden Stirnseite kann an der Kupplungshülse ein radial nach innen gerichteter, den stirnseitigen Durchtritt verjüngenden Kragen ausgebildet sein, der eine axiale Anschlagfläche für einen an der radialen Außenseite des zweiten Wellenstücks ausgebildeten, umlaufenden Kragen bildet.

Zur Sicherung in Drehrichtung ist ggf. eine zusätzliche Einrichtung vorgesehen, die entweder ebenfalls als separates Bauteil ausgeführt ist oder als Formschlusssicherung ausgeführt ist, indem die einander zugewandten Stirnseiten der beiden Wellenteile in Drehrichtung formschlüssig ineinandergreifen.

Sofern die Sicherung in Drehrichtung über ein separates Bauteil durchgeführt wird, kann dieses mit dem Bauteil zur axialen Sicherung zusammenfallen, dem somit eine doppelte Sicherungsfunktion sowohl in Achsrichtung als auch in Drehrichtung zukommt. Grundsätzlich ist es aber auch möglich, die Sicherung in Drehrichtung über ein zusätzliches, eigenständiges Bauteil auszuführen, das unabhängig und separat von dem Kupplungsteil ausgebildet ist, welches die beiden Wellenteile in Achsrichtung aneinander sichert.

Gemäß einer weiteren Ausführungsform erfolgt die Drehsicherung über einen Reibschluss zwischen Basisteil und Verlängerungsteil. Hierfür können die sich kontaktierenden Stirnseiten von Basisteil und Verlängerungsteil mit einem entsprechend hohen Reibungskoeffizienten ausgebildet sein, indem die Kontaktstellen beispielsweise eine reibungserhöhende Beschichtung aufweisen. Der Vorteil dieser Ausführung liegt darin, dass die einander zugewandten Enden von Basisteil und Verlängerungsteil jeweils rotationssymmetrisch ausgebildet sein können. Der Reibschluss kann aber auch über ein weiteres Koppelelement erfolgen, das beispielsweise als konusförmige Aufsteckhülse ausgeführt ist und auf die Stirnseite entweder des Basisteils oder des Verlängerungsteils aufgesetzt wird und von der entsprechend komplementär ausgebildeten Stirnseite des gegenüberliegenden Wellenteils umgriffen wird. Die Aufsteckhülse ermöglicht entweder nur zu einem Wellenteil eine reibschlüssige Verbindung, wobei in dieser Ausführung zum jeweils anderen Wellenteil eine feste Verbindung vorliegt, beispielsweise durch Verkleben oder dergleichen. Möglich ist aber auch eine Reibschlussverbindung von der Kopplungshülse zu beiden Wellenteilen.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer Scheibenwischvorrichtung für ein Fahrzeug,
- Fig. 2: eine schematische Darstellung einer Antriebsvorrichtung für einen Scheibenwischer, mit einem elektrischen Antriebsmotor, dessen Ankerwelle mit einem Zahnrad kämmt, das fest mit einer Abtriebswelle zum Antrieb des Wischarms gekoppelt ist,
- Fig. 3 bis 6: verschiedene Ausführungsvarianten einer zweigeteilten Abtriebswelle, bestehend aus einem Basisteil und einem über eine Verbindungseinrichtung anzukoppelnden Verlängerungsteil,
- Fig. 7: die Abtriebswelle in der Ausführung gemäß Fig. 3 einschließlich der Antriebsvorrichtung,
- Fig. 8 bis 11: Schnittdarstellungen durch den Verbindungsbereich zwischen Basisteil und Verlängerungsteil in verschiedenen Ausführungen.

In den Figuren sind gleiche Bauteile mit gleichen Bezugszeichen versehen.

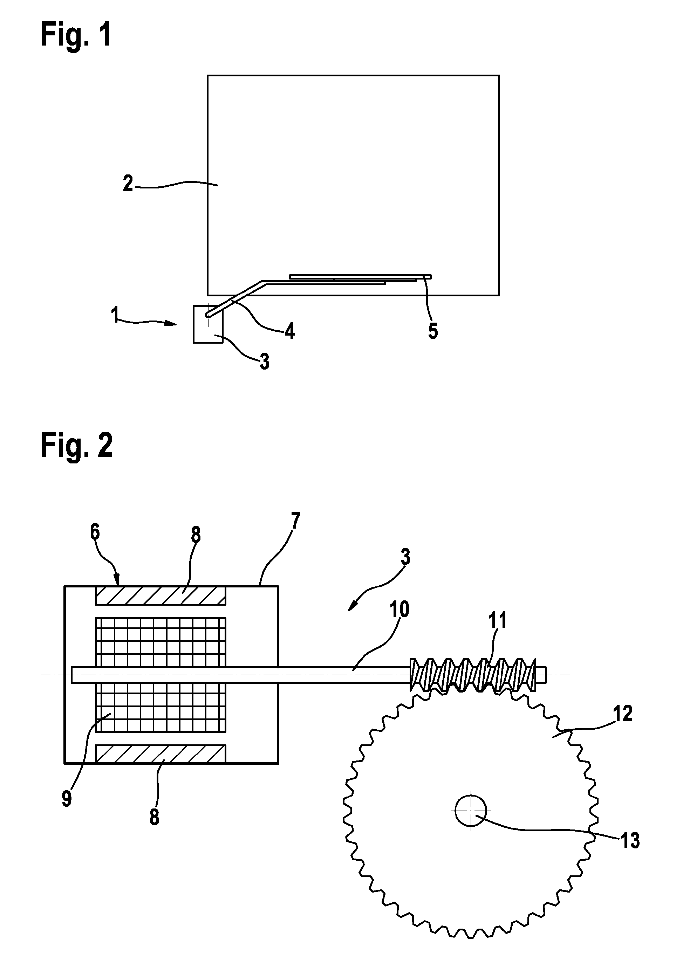

In Fig. 1 ist eine Scheibenwischvorrichtung 1 für ein Kraftfahrzeug dargestellt, bestehend aus einer Antriebsvorrichtung 3, einem von der Antriebsvorrichtung 3 betätigten Wischarm 4 und einem am Wischarm 4 gehaltenen Wischblatt 5, das auf einer Fahrzeugscheibe 2 aufliegt. Der Antriebsmotor ist als Elektromotor ausgeführt. Der Wischarm 4 ist drehbar gelagert und führt bei einer Betätigung durch den Antriebsmotor eine Rotationsbewegung aus.

In Fig. 2 ist die Antriebsvorrichtung 3 im Detail dargestellt. Die Antriebsvorrichtung 3 umfasst den elektrischen Antriebsmotor 6, der in einem Gehäuse 7 Permanentmagnete 8 aufweist, welche einen Anker umschließen, bestehend aus einer über einen Kommutator bestrombaren Spule 9 und einer fest mit der Spule 9 verbundenen Anker- bzw. Rotorwelle 10. Die Rotorwelle 10 trägt auf ihrem außerhalb des Statorgehäuses 7 gelegenen Wellenabschnitt ein Gewinde 11, das mit einem Zahnrad 12 kämmt, welches auf einer Abtriebswelle 13 drehfest angeordnet ist. Das Zahnrad 12 bildet ein Getriebebauteil zur Umsetzung der Drehbewegung der Ankerwelle 10 auf die Abtriebswelle 13. Die Abtriebswelle 13 treibt unmittelbar den Wischarm 4 an (Fig. 1).

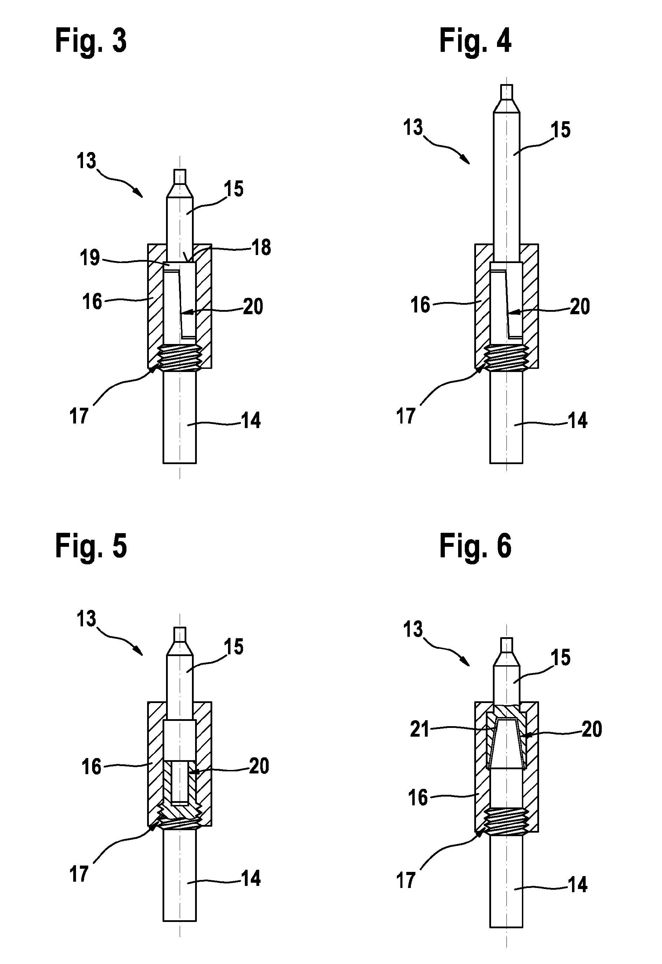

Um die Abtriebswelle 13 an unterschiedliche Einbausituationen mit einfachen Maßnahmen anpassen zu können, ist die Abtriebswelle 13 zweiteilig aufgebaut, was in den folgenden Figuren dargestellt ist und erläutert wird. Wie Fig. 3 zu entnehmen, besteht die zweiteilige Abtriebswelle 13 aus einem Basisteil 14 und einem Verlängerungsteil 15, wobei Basisteil 14 und Verlängerungsteil 15 axial hintereinander liegend angeordnet und koaxial zueinander ausgerichtet sind. Die Gesamtlänge der Abtriebswelle 13 bestimmt sich somit aus den beiden Wellenabschnitten, nämlich dem Basisteil 14 und dem Verlängerungsteil 15.

Basisteil 14 und Verlängerungsteil 15 sind in Achsrichtung mithilfe einer Kupplungshülse 16 miteinander verbunden. Die Kupplungshülse 16 besitzt benachbart zu ihrer dem Basisteil 14 zugewandten Stirnseite ein Innengewinde 17, das in ein entsprechendes, am Außenmantel des Basisteils 14 angeordneten Außengewinde eingreift.

Auf der dem Gewinde 17 axial gegenüberliegenden Stirnseite ist der Durchtritt der Kupplungshülse 16 mit einem radial nach innen gerichteten Innenkragen 18 versehen, der mit einer Ringschulter 19 auf der Mantelfläche des Verlängerungsteils 15 korrespondiert. Die Ringschulter 19 überragt die Mantelfläche des Verlängerungsteils 15 in radial nach außen, so dass bei aufgesteckter Kupplungshülse 16 die Innenseite des Innenkragens 18 in Achsrichtung eine Anschlagfläche für die Ringschulter 19 am Verlängerungsteil 15 bildet. Die Kupplungshülse 16 sichert das Verlängerungsteil 15 in Achsrichtung am Basisteil 14.

Um auch in Drehrichtung eine feste Verbindung zwischen Basisteil 14 und Verlängerungsteil 15 zu schaffen, ist eine zusätzliche Verbindungseinrichtung 20 vorgesehen, die im gezeigten Ausführungsbeispiel als Formschluss zwischen den beiden Wellenteilen 14 und 15 ausgeführt ist. Der Formschluss besteht aus einer nicht-rotationssymmetrischen Ausführung der einander zugewandten Stirnseiten von Basisteil 14 und Verlängerungsteil 15, die zueinander komplementär ausgeführt sind. Beispielsweise können, wie in den Figuren 3 und 4 sowie 7 dargestellt, die einander zugewandten Enden von Basisteil 14 und Verlängerungsteil 15 jeweils als im Querschnitt halbkreisförmig ausgeführter, axial überragender Stirnabschnitt ausgeführt sein, wobei die Stirnabschnitte von Basisteil 14 und Verlängerungsteil 15 in komplementärer Weise ineinander greifen. In Drehrichtung ist hierdurch ein Formschluss gebildet.

Wie einem Vergleich der Figuren 3 und 4 zu entnehmen, können bei ansonsten identischer Ausführung allein über unterschiedlich lang ausgebildete Verlängerungsteile 15 unterschiedliche Gesamtlängen der Abtriebswelle 13 eingestellt werden.

In Fig. 5 ist eine Abtriebswelle 13 mit zwei Wellenteilen 14 und 15 dargestellt, die formschlüssig über eine Verbindungseinrichtung 20 in einer weiteren Ausführung in Drehrichtung miteinander gekoppelt sind. Der Formschluss wird dadurch hergestellt, dass die einander zugewandten stirnseitigen Enden der Wellenteile 14, 15 einen zentrischen, nicht rotationssymmetrischen Vorsprung am Verlängerungsteil 15 bzw. eine zugeordnete zentrische Ausnehmung an der Stirnseite des Basisteils 14 aufweisen. Der Vorsprung bzw. die Ausnehmung besitzen jeweils einen rechteckförmigen Querschnitt.

Im Ausführungsbeispiel gemäß Fig. 6 ist die Drehsicherung zwischen Basisteil 14 und Verlängerungsteil 15 über Reibschluss realisiert, wofür ein als separates Bauteil ausgeführtes Koppelelement 21 vorgesehen ist, das zusätzlich zu der Kupplungshülse die Verbindungseinrichtung 20 zur drehsicheren Verbindung zwischen den Wellenteilen 14 und 15 bildet. Das Koppelelement 21 ist als konusförmige Aufsteckhülse ausgeführt, die auf die entsprechend ausgebildete Stirnseite des Basisteils 14 aufgesetzt wird und von der komplementär ausgeführten Stirnseite des Verlängerungsteils 15 übergriffen ist. Das Koppelelement 21 erlaubt einen Reibschluss zumindest zwischen einem der beiden Wellenteile 14 bzw. 15 mit der Außenseite und/oder der Innenseite des Koppelelementes.

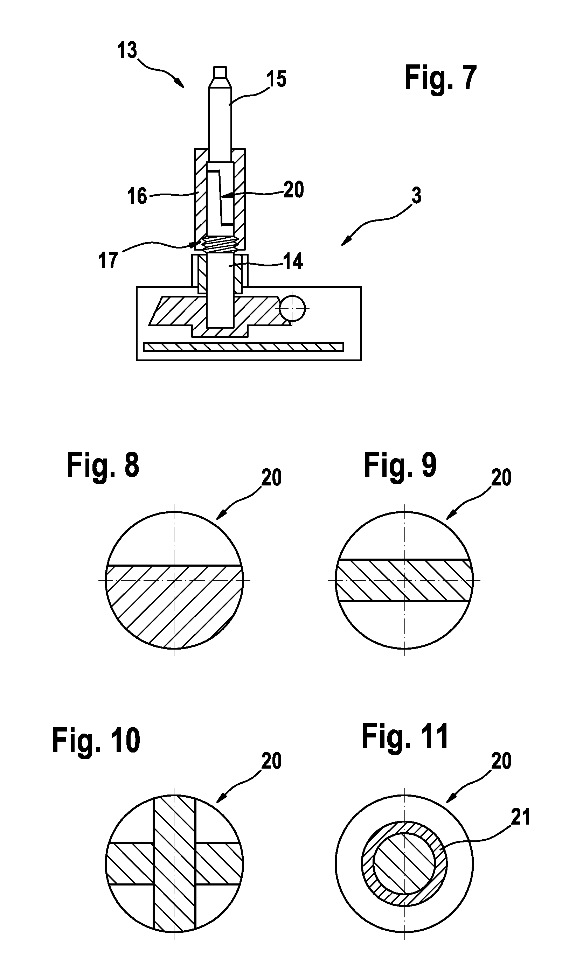

In Fig. 7 ist die Antriebswelle 13 in Verbindung mit der Antriebsvorrichtung 3, bestehend aus dem Elektromotor, dargestellt.

In den Figuren 8 bis 11 sind verschiedene Verbindungseinrichtungen 20 zwischen den Wellenteilen der Abtriebswelle dargestellt, die jeweils einen Formschluss in Drehrichtung bilden. Das Ausführungsbeispiel gemäß Fig. 8 entspricht einer Schnittdarstellung durch den zusammengefügten Bereich zwischen Basisteil und Verlängerungsteil gemäß Ausführungsbeispiel nach Fig. 3, 4 und 7. In dieser Ausführung besitzen die stirnseitigen, einander zugewandten Enden von Basisteil und Verlängerungsteil jeweils einen im Querschnitt halbkreisförmigen und axial überragenden Stirnabschnitt, wobei die jeweiligen Stirnabschnitte komplementär zueinander ausgebildet sind und im zusammengefügten Zustand zu einem Vollkreis zusammengesetzt sind.

Fig. 9 entspricht dem Ausführungsbeispiel nach Fig. 5, bei dem die Verbindungseinrichtung 20 als Formschlussverbindung ausgeführt ist und einen zentrischen Stirnabschnitt an einem der Wellenteile aufweist, wobei der zentrische Abschnitt geradlinige Seitenflanken besitzt. Der zentrische Abschnitt ragt in der montierten Position in eine komplementär ausgeführte stirnseitige Ausnehmung am jeweils anderen Wellenteil ein.

Im Ausführungsbeispiel nach Fig. 10 sind die ineinanderzufügenden stirnseitigen Bereiche der beiden Wellenteile kreuzförmig ausgebildet.

Das Ausführungsbeispiel nach Fig. 11 entspricht demjenigen nach Fig. 6, die Verbindung zwischen den Wellenteilen erfolgt hier über einen Reibschluss, wofür das konusförmige Koppelelement 21 vorgesehen ist.

## Patentansprüche

1. Welle im Übertragungsweg zwischen einem Antriebsmotor (6) und einem Wischarm (4) einer Scheibenwischvorrichtung (1) in einem Fahrzeug, insbesondere mit dem Wischarm (4) bewegungsgekoppelte Abtriebswelle (13),
**dadurch gekennzeichnet, dass** die Welle (13) zweiteilig aufgebaut ist und ein Basisteil (14) und ein separat ausgebildetes, austauschbares Verlängerungsteil (15) umfasst, wobei das Verlängerungsteil (15) mithilfe einer Verbindungseinrichtung (20) lösbar mit dem Basisteil (14) zu koppeln ist und im gekoppelten Zustand die Bewegung des Basisteils (14) auf das Verlängerungsteil (15) übertragbar ist.

2. Welle nach Anspruch 1,
**dadurch gekennzeichnet, dass** das Basisteil (14) und das Verlängerungsteil (15) der Welle (13) in Drehrichtung formschlüssig verbunden sind.

3. Welle nach Anspruch 2,
**dadurch gekennzeichnet, dass** die einander zugewandten Enden von Basisteil (14) und Verlängerungsteil (15) formschlüssig ineinander greifen.

4. Welle nach Anspruch 3,
**dadurch gekennzeichnet, dass** die einander zugewandten Enden von Basisteil (14) und Verlängerungsteil (15) komplementär zueinander ausgebildet sind.

5. Welle nach einem der Ansprüche 1 bis 4,
**dadurch gekennzeichnet, dass** das Basisteil (14) und das Verlängerungsteil (15) der Welle (13) in Drehrichtung reibschlüssig verbunden sind.

6. Welle nach einem der Ansprüche 1 bis 5,
**dadurch gekennzeichnet, dass** zwischen die einander zugewandten Enden von Basisteil (14) und Verlängerungsteil (15) ein Koppelelement (21) eingefügt ist.

7. Welle nach Anspruch 5 und 6,
**dadurch gekennzeichnet, dass** über das Koppelement (21) zumindest zu einem der Wellenteile (14, 15) ein Reibschluss erzeugbar ist.

8. Welle nach einem der Ansprüche 1 bis 7,
**dadurch gekennzeichnet, dass** das Basisteil (14) und das Verlängerungsteil (15) der Welle (13) axial über ein separates Kupplungselement verbunden sind.

9. Welle nach Anspruch 8,
**dadurch gekennzeichnet, dass** das Kupplungselement als Kupplungshülse (16) ausgebildet ist, die das Basisteil (14) und das Verlängerungsteil (15) übergreift.

10. Scheibenwischvorrichtung in einem Fahrzeug mit einer Welle (13) im Übertragungsweg zwischen einem Antriebsmotor (6) und einem Wischarm (4) nach einem der Ansprüche 1 bis 9.
